# EUROPEAN PATENT APPLICATION

(11) **EP 2 754 917 A2**
(43) Date of publication of application: **16.07.2014**
(21) Application number: 13197638.3
(22) Date of filing: 17.12.2013
(51) Int. Cl.: F16F 9/43, F16F 9/02

(54) **Gas spring and overpressure relief and fill valve assembly**

(30) Priority: 10.01.2013 US 201361750941 P; 13.12.2013 US 201314105780
(71) Applicant: Dadco, Inc., Plymouth MI 48170 (US)
(72) Inventor: Moss, James, W, Plymouth, MI Michigan 48170 (US)
(74) Representative: Heyer, Volker

(57) **Abstract**

A gas spring includes a fill valve, and a rupture disc carried by the fill valve. An overpressure relief and fill valve assembly includes a valve housing with a valve passage, the fill valve carried by the valve housing and including a valve stem extending into the valve passage and an overpressure relief passage extending through the fill valve, and a rupture disc carried by the fill valve in communication with the overpressure relief passage. A gas spring may include the valve assembly therein.

## Description

### Technical Field

This invention relates generally to gas springs and, more particularly, to fill and overpressure relief valves for gas springs.

### Background

Gas springs are well known and have been used in dies of presses for sheet metal stamping operations. For example, gas springs can be used as press cushions, among many other types of applications. A conventional gas spring includes a casing, a piston rod carried in the casing, a bearing and sealing housing held in the casing by a retainer to guide and retain the piston rod within the casing, and a pressure chamber to hold pressurized gas, typically nitrogen at an operating pressure of, for example, 2,000 to 5,000 PSI in some applications. The housing includes one or more bearings to guide movement of the piston rod within the casing, and one or more seals to prevent leakage from the pressure chamber. The pressurized gas biases the piston rod to an extended position, and yieldably resists movement of the piston rod from the extended position to a retracted position. Typically, a fill valve is carried by the casing to allow the pressurized gas to be introduced into the pressure chamber. In some implementations, the gas spring also includes a rupture disc arranged in another port of the casing separate from and parallel to the fill valve.

### Summary

In at least one implementation, a gas spring for forming equipment includes a casing including an axially extending side wall establishing an open end, a transversely extending closed end wall axially spaced from the open end, and a pressure chamber established in part by the side and end walls to receive a gas under pressure. The gas spring also includes a piston rod received at least in part in the casing and extending through a piston rod housing for reciprocation between extended and retracted positions. The gas spring further includes a fill valve in fluid communication with the pressure chamber and extending along a valve axis, and a rupture disc in fluid communication with the pressure chamber and carried by the fill valve.

In another implementation, an overpressure relief and fill valve assembly includes a valve housing, and a fill valve carried by the valve housing. The valve housing includes a first open end, a second open end, and a valve passage between the open ends. The fill valve is carried by the valve housing and includes a valve stem extending into the second open end of the valve housing and into the valve passage of the valve housing, an overpressure relief passage extending through the fill valve, and a rupture disc carried by the fill valve in communication with the overpressure relief passage.

Some potential objects, features and advantages of the gas spring and/or its components set forth herein include providing a device that is readily usable with a wide range of forming equipment, readily permits use of common components among gas springs of different configuration and construction, can be easily serviced and its components replaced as needed, can be used in a wide range of applications having different size and force requirements, is readily adaptable to a wide range of press configurations, includes a combination overpressure relief valve and fill valve, and is of relatively simple design, economical manufacture and assembly, robust, durable, reliable and in service has a long useful life. Of course, an apparatus embodying the present invention may achieve, none, some, all or different objects, features or advantages than those set forth with regard to the illustrative embodiments disclosed herein.

### Brief Description of the Drawings

The following detailed description of preferred embodiments and best mode will be set forth with regard to the accompanying drawings in which:
FIG. 1 is a sectional view of an illustrative embodiment of a gas spring with an overpressure relief and fill valve assembly illustrated in a closed position;
FIG. 2 is an enlarged fragmentary sectional view of a portion of the gas spring and the valve assembly of FIG. 1; and
FIG. 3 is an enlarged fragmentary sectional view of a portion of the gas spring and the valve assembly of FIG. 1, illustrating the valve assembly in an open position.

### Detailed Description of Preferred Embodiments

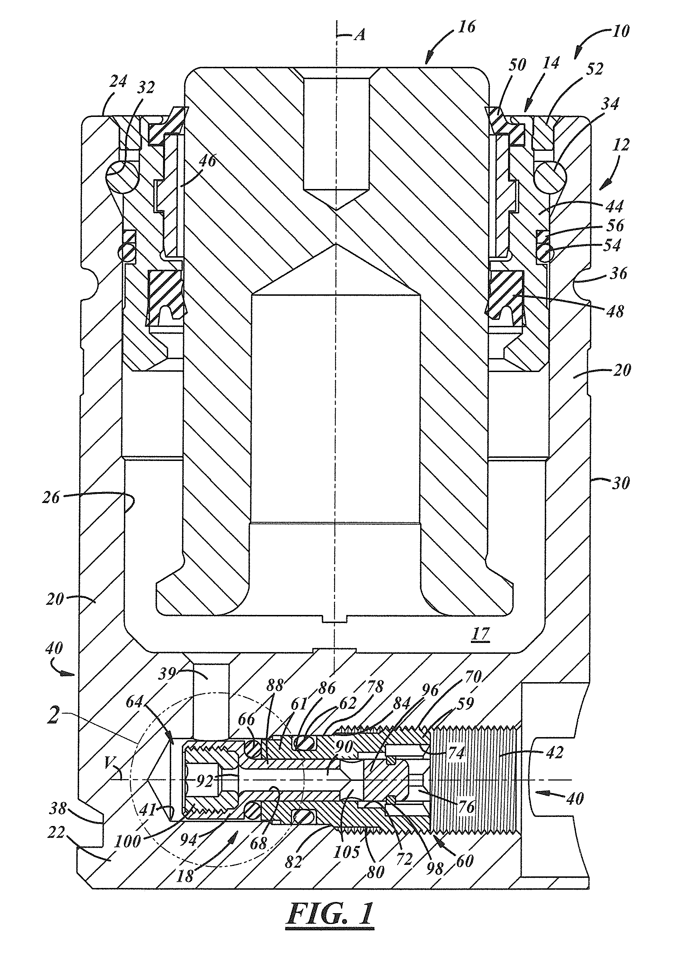

Referring in more detail to the drawings, FIG. 1 illustrates a gas spring 10 that may be used in forming equipment, for example, sheet metal stamping dies and mechanical presses (not shown). In general, the gas spring 10 may include a casing 12, a guide and seal assembly 14 carried by the casing 12, a piston rod 16 carried by the casing 12 and extending through the guide and seal assembly 14, and a pressure chamber 17. According to the present disclosure, the gas spring 10 includes an overpressure relief and fill valve assembly 18 in fluid communication with the pressure chamber 17.

As will be discussed in greater detail below, the valve assembly 18 may function to allow pressurized gas to be communicated into and out of the pressure chamber 17 and to provide protection against overpressure of gas in the pressure chamber 17. The valve assembly 18 may act as a one way valve to allow gas to be admitted into pressure chamber 17 of the gas spring 10, while preventing gas in the pressure chamber 17 from unintentionally exiting the gas spring 10, absent overpressure conditions in the chamber 17. The valve assembly 18 may be opened to release pressurized gas from within the pressure chamber 17 of the gas spring 10, when desired. Although illustrated in one implementation as being carried by a particular portion of the casing 12, the valve assembly 18 may be carried by the piston rod 16 or by another portion of the casing 12 in other implementations.

The casing 12 may include a side wall 20 that may terminate axially at a closed end 22, and at an open end 24 that receives the guide and seal assembly 14 and the piston rod 16 therein. The pressure chamber 17 is established at least in part by the side and end walls 20, 22 to receive a gas under pressure. The closed end 22 may be a separate component attached to the side wall 20, for example by a weld joint, or may be integrally produced with the side wall 20. The side wall 20 of the casing 12 has an inner surface 26 defining at least in part the pressure chamber 17, and an outer surface 30. The casing 12 may be of generally cylindrical shape, for example, wherein at least one of the inner or outer surfaces 26, 30 is cylindrical. The inner surface 26 of the side wall 20 may have a circumferential retainer groove 32 constructed for receipt of a retainer, shown here by way of example as a snap ring 34, to maintain the gas spring 10 in its assembled state. To facilitate mounting and locating the gas spring 10 within a press, a pair of longitudinally spaced circumferential grooves 36, 38 may be machined, formed, or otherwise provided in the outer surface 30 of the casing 12 adjacent its ends 22, 24. To admit gas into the gas spring 10, the casing 12 may include a passage or fill port 40 that may be provided through the closed end 22 of the casing 12 in any suitable manner. The fill port 40 may include a threaded passage 42 for coupling of the fill valve assembly 18 to the casing 12. The closed end 22 of the casing also may include a passage 39 in fluid communication between and with the pressure chamber 17 and the fill port 40.

The guide and seal assembly 14 may be disposed in the open end 24 of the casing 12 and may be sealingly coupled to the casing 12. The assembly 14 may include a piston rod housing 44, and a guide bushing 46, a rod seal 48, a rod wiper 50, a dust cover 52, a casing seal 54, and a support ring 56, all of which may be carried by the housing 44. The guide bushing 46 may be composed of any suitable low friction material, and may be sized to slidably engage the piston rod 16 to guide the piston rod 16 for axial reciprocation within the casing 12. The housing 44 may include a shoulder in the outer surface to cooperate with the snap ring 34, which removably retains the housing 44 in the casing 12.

The piston rod 16 is disposed at least in part in the casing 12 and through the guide and seal assembly 14 for reciprocation along an axis A between extended and retracted positions over a cycle of the gas spring 10 including a retraction stroke and an extension or return stroke. The piston rod 16 is acted on by gas in the pressure chamber 17 to bias the piston rod 16 toward an extended position, and away from the retracted position. The piston rod 16 extends out of the casing 12 through the guide and seal assembly housing 44, and includes an outer axial end engageable with a ram or other portion of a press, a die component, or other piece of forming equipment (not shown), and an inner axial end disposed in the casing 12 and that may be radially enlarged and engageable with a portion of the piston rod housing 44 to retain the piston rod 16 in the casing 12. The piston rod 16 is in sealing engagement with the rod seal 48 and in sliding engagement with the piston rod bushing 46 for guided relative movement between the extended and retracted positions.

The valve assembly 18 may include a valve housing 60 received in the fill port 40 of the casing 12, and a seal 62 between the valve housing 60 and the casing 12. More specifically, the valve assembly 18 may be sealingly carried by or coupled to the casing 12. The valve assembly 18 also may include a valve 64 carried by the valve housing 60, and a seal 66 between the valve 64 and the valve housing 60 to effectively establish a check valve. The valve 64 may reciprocate with respect to the valve housing 60 along a longitudinally extending valve axis V, according to rectilinear motion. Although not shown, the valve assembly 18 further may include a spring to bias the valve 60 to a normally closed position against the seal 66. The spring may be disposed between any suitable portions of the valve 64 and valve housing 60, or in any other suitable location.

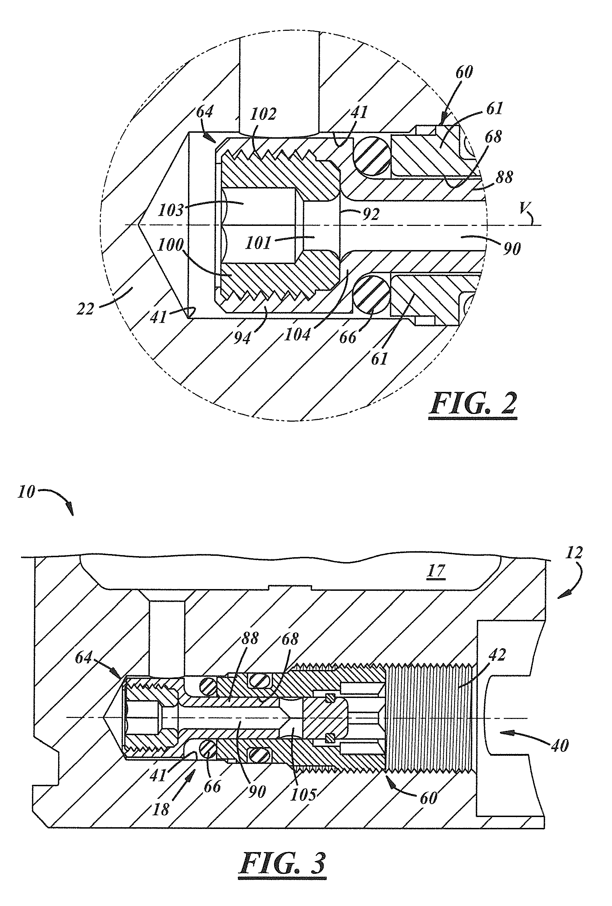

Referring to FIG. 2, the valve housing 60 may include a first open end 59, a second open end 61, and a valve passage 68 between the open ends 59, 61. The first end 59 of the valve housing 60 may include an external fastener portion 70, a counterbore 72 coaxial with the valve passage 68, a second counterbore 74 coaxial with the valve passage 68, and tooling features 76. The fastener portion 70 may include external threads, and the tooling features 76 may include internal flats, hexagonal counterbore, or other internal surface geometry to cooperate with any suitable non-circular tool to install the valve housing 60 into the port 40. The first open end 59 of the valve housing 60 may have a first diameter, for example, established by the external fastener portion 70, and the valve housing 60 also may have a second diameter 78 between the open ends 59, 61 that is smaller than the first diameter 70. The valve housing 60 also may include a third diameter 80 between the first and second diameters 70, 78, and a shoulder 82 between the second and third diameters 78, 80 to axially engage a corresponding shoulder 84 of the casing 12 within the fill port 40 to thereby limit the extent to which the valve housing 60 can be threaded into the casing 12.

The housing seal 62 may be carried by the valve housing 60, and may include a journal or radial seal carried externally around the valve housing 60. For example, the seal 62 may be carried in a corresponding external groove 86 in the second diameter 78 of the valve housing 60, and may contact a corresponding smooth cylindrical surface of the fill port 40. The seal 62 may include an O-ring and may be elastomeric and, more specifically, may be composed of polyurethane, Buna-N (nitrile), VITON, silicone, or any other suitable seal material. For example, the seal 62 may have a durometer on the Shore A scale (ASTM 2240) of between 20 and 60 for silicone materials, or between 60 and 95 for nitrile and VITON materials.

The valve 64 may include a valve stem 88 extending into and through the second open end 61 of the valve housing 60 and into the valve passage 68 of the valve housing 60, an overpressure relief passage 90 extending through the valve 64, and a rupture disc 92 carried by the valve 64 in communication with the overpressure relief passage 90. The valve 64 also may include a valve head 94 extending from the valve stem 88 and larger in diameter than the valve stem 88 but smaller in diameter than the second diameter 78 of the valve housing 60. The valve 64 further may include a first end 96 corresponding to the first end 59 of the valve housing 60 and extending into the counterbore 72 of the valve housing 60. An annular retainer 98 may be received in a corresponding annular groove adjacent to the first end 96 of the valve 64. The retainer 98 instead may be an enlarged portion that may be staked, swaged, or formed in any other suitable manner.

In one embodiment, the valve 64 additionally may include a disc retainer 100 coupled to the valve head 94 to retain the rupture disc 92 to the valve 64. The rupture disc 92 and the retainer 100 may be received in a counterbore 102 of the overpressure relief passage 90, for example in the valve head 94. The retainer 100 may include an annular component having external threads for complimentary threaded engagement with corresponding internal threads of the valve counterbore 102, and having non-circular internal tooling features to accept a fastening tool (not shown) therein. The retainer 100 may include a through passage 101 in fluid communication with the rupture disc 92, and a fastener passage 103 in fluid communication with the through passage 101, for example, a hexagonal socket. In other embodiments, the rupture disc 92 may be welded to the valve 64, coupled thereto with adhesive, or carried thereby in any other suitable manner.

The valve 64 also includes a second valve end 104 corresponding to the second end 61 of the valve housing 60. The overpressure relief passage 90 extends axially between the first and second valve ends 96, 104 and communicates with a transversely extending fluid flow passage 105 to establish a fluid overpressure relief flow path.

The valve seal 66 may include a face seal disposed between the valve head 100 and the second open end 61 of the valve housing 60. The seal 66 engages corresponding sealing surfaces of the valve 64 and the valve housing 60 when the valve 64 is closed. And, when the valve 64 is open, a fluid charge or discharge flow path is established through the clearance between the valve stem 88 and the valve passage 68 and past the seal 66 and through the passage 39 to the pressure chamber 17. The seal 66 may include an O-ring and may be elastomeric and, more specifically, may be composed of polyurethane, Buna-N (nitrile), VITON, silicone, or any other suitable seal material. For example, the seal 66 may have a durometer on the Shore A scale (ASTM 2240) of between 20 and 60 for silicone materials, or between 60 and 95 for nitrile and VITON materials.

In assembly, the guide and seal assembly 14 and the piston rod 16 may be assembled into the casing 12 and retained therein in any suitable manner. For the valve assembly 18, the seal 66 may be placed over the valve stem 88 of the valve 64, and the valve 64 may be inserted into the second open end 61 of the valve housing 60 until the first end 96 of the valve 64 projects into one or both of the counterbores 72, 74 of the valve housing 60. The retainer 98 may be coupled into the groove in the first end 96 of the valve 64, or the first end 96 may be enlarged by staking, swaging, or the like, or by any other suitable technique to retain the valve 64 in the housing 60. Also, the housing seal 62 may be placed over the second diameter 78 of the housing 60 and into the seal groove 86. Thereafter, the valve assembly 18 may be inserted into the port 40 of the casing 12, and the external fastener portion 70 may be coupled to the port 40 to a set depth, for example, via threading into the port threads 42 until the corresponding shoulders 82, 84 engage.

In operation, and with respect to FIG. 3, any suitable pressurizing device (not shown) may be coupled to the port threads 42 to introduce pressurized gas into the port 40. A portion of the pressurizing device will displace the valve 64 further into the port 40 so as to unseat the valve 64 from the seal 66. Accordingly, pressurized gas may flow around the valve stem 88, between the valve passage 68 and the valve stem 88, past the seal 66, around the valve head 94, and through a clearance between the valve head 94 and a passage 41, through the passage 39, and into the pressure chamber 17. Once a desired pressure is reached, the pressurizing device may be retracted to allow the valve 64 to seat against the seal 66 and thereby seal the pressurized gas within the pressure chamber 17.

Gas may be discharged from within the pressure chamber 17 by forcing the valve 64 to move along its axis V into the casing 12 and away from the seal 66. Overpressure within the pressure chamber 17 may be relieved when a force on the rupture disc 92 due to the overpressure condition exceeds the strength of the rupture disc 92. Accordingly, the disc 92 ruptures and allows gas to flow from the pressure chamber 17, through the passage 39, through the clearance between the passage 41 and the valve head 94, into the second end 104 of the valve 64 through the passages 101, 103, through the ruptured disc 92, through the valve passage 90, transverse passage 105, and counterbores 72, 74, through the port 40 and out of the gas spring 10.

Accordingly, the gas spring 10 includes a fill valve and a rupture disc in serial fluid communication with the pressure chamber 17 and, more specifically, the overpressure relief and fill valve assembly 18 may be disposed in the existing fill port 40 of the gas spring casing 12. This allows for less machining, complexity, and cost during manufacturing and assembly, and provides a more flexible gas spring design. In fact, the presently disclosed design allows an end user to retrofit existing gas springs for use with the valve assembly 18. This design also allows an end user to replace a ruptured disc and to install discs which rupture at different overpressures.

The gas spring 10 may be assembled in any suitable manner and its various components may be manufactured in any suitable manner and composed of any suitable materials. For example, the casing 12 may be turned, bored, drilled, tapped, and/or otherwise machined from tube and/or bar stock. In another example, the valve 64 and valve housing 60 of the valve assembly 18 may be machined from bar stock, for example, of steel, brass, or any other suitable material(s).

One or more of the gas springs 10 may be used in various implementations in forming equipment to provide a moveable component or support of a forming die or a workpiece with a yielding force or a return force. For example, in a binder ring implementation, the gas spring 10 may provide a yielding force against a binder ring of a forming die to hold a metal workpiece while another part of the forming die forms, cuts, stretches, or bends the workpiece. In a lifter implementation, the gas spring 10 may provide a yielding force and return force to lift a workpiece off a surface of the forming die or to otherwise maintain control of the workpiece. In a cam tool implementation, the gas spring 10 may apply a yielding force to return a cam-activated tool to its home position. Of course, the gas spring 10 may be used in a wide range of other implementations.

It should be appreciated that one of ordinary skill in the art will recognize other embodiments encompassed within the scope of this invention. The plurality of arrangements shown and described above are merely illustrative and not a complete or exhaustive list or representation. Of course, still other embodiments and implementations can be achieved in view of this disclosure. The embodiments described above are intended to be illustrative and not limiting. The scope of the invention is defined by the claims that follow.

## Claims

1. A gas spring for forming equipment, comprising:
a casing including an axially extending side wall, an open end, a transversely extending closed end wall axially spaced from the open end, a pressure chamber established in part by the side and end walls to receive a gas under pressure;
a piston rod housing received at least in part in the casing;
a piston rod received at least in part in the casing and extending through the piston rod housing and the casing for reciprocation between extended and retracted positions; and
a fill valve in fluid communication with the pressure chamber and extending along a valve axis; and
a rupture disc in fluid communication with the pressure chamber and carried by the fill valve.

2. The gas spring of claim 1, further comprising:
an overpressure relief and fill valve assembly in fluid communication with the pressure chamber, and including:
a valve housing having a valve passage, and
the fill valve having a valve stem extending into the valve passage of the valve housing, an overpressure relief passage extending through the fill valve, and the rupture disc carried by the fill valve in communication with the overpressure relief passage.

3. The gas spring of claim 2, wherein the fill valve also has a valve head disposed between the valve housing and the pressure chamber, wherein the rupture disc is carried by the valve head.

4. The gas spring of claim 2, wherein the casing also includes a fill port in fluid communication with the pressure chamber, and the valve assembly is carried in the fill port of the casing such that the valve housing is carried by the casing and received in the fill port.

5. The gas spring of claim 2, wherein the end wall of the casing includes a passage in fluid communication with the pressure chamber and the fill port, and wherein the fill valve assembly also includes a first seal between the valve housing and the casing end wall.

6. The gas spring of claim 2, wherein the assembly also includes a second seal that engages corresponding sealing surfaces of the fill valve and the valve housing when the fill valve is closed, and wherein a fluid charge or discharge flow path is established between the valve stem and the valve passage and past the second seal when the fill valve is open.

7. The gas spring of claim 2, wherein the fill valve includes a first valve end corresponding to the first end of the valve housing, a second valve end corresponding the second open end of the valve housing, and wherein the overpressure relief passage extends axially between the first and second valve ends and in communication with a transversely extending fluid flow passage to establish a fluid overpressure relief flow path.

8. An overpressure relief and fill valve assembly, comprising:
a valve housing including:
a first open end,
a second open end, and
a valve passage between the open ends; and
a fill valve carried by the valve housing and including:
a valve stem extending into the second open end of the valve housing and into the valve passage of the valve housing,
an overpressure relief passage extending through the fill valve, and
a rupture disc carried by the fill valve in communication with the overpressure relief passage.

9. The valve assembly of claim 8, further comprising a seal disposed between the fill valve and the valve housing, wherein the seal engages corresponding sealing surfaces of the fill valve and the valve housing when the fill valve is closed, and wherein a fluid charge or discharge flow path is established between the valve stem and the valve passage and past the seal when the fill valve is open.

10. The valve assembly of claim 9, wherein the fill valve includes a valve head larger in diameter than the valve stem, and wherein the seal is a face seal disposed between the valve head and the second open end of the valve housing.

11. The valve assembly of claim 8, wherein the first open end of the valve housing includes an external fastener portion and a counterbore coaxial with the valve passage, and wherein the fill valve includes a first end extending into the counterbore and including an enlarged portion greater in diameter than the valve passage, and wherein the enlarged portion includes an annular retainer carried in an annular groove of the fill valve, and also wherein the first open end of the valve housing also includes a second counterbore coaxial with the valve passage and including internal tooling features.

12. The valve assembly of claim 8, wherein the first open end of the valve housing has a first diameter, the valve housing has a second diameter between the open ends that is smaller than the first diameter, and wherein the fill valve includes a valve head larger in diameter than the valve stem but smaller in diameter than the second diameter of the valve housing.

13. The valve assembly of claim 8, wherein the fill valve includes a valve head larger in diameter than the valve stem, and wherein the fill valve also includes a retainer coupled to the valve head to retain the rupture disc to the fill valve, wherein the rupture disc and the retainer are received in a counterbore of the overpressure relief passage.

14. The valve assembly of claim 8, further comprising a seal carried by the valve housing.

15. The valve assembly of claim 8, wherein the fill valve includes a first valve end corresponding to the first open end of the valve housing, a second valve end corresponding the second open end of the valve housing, and wherein the overpressure relief passage extends axially between the first and second valve ends and communicates with a transversely extending fluid flow passage to establish a fluid overpressure relief flow path.
